# EUROPÄISCHE PATENTSCHRIFT

(11) **EP 4 046 916 B1**
(45) Veröffentlichungstag und Bekanntmachung des Hinweises auf die Patenterteilung: **19.07.2023**
(21) Anmeldenummer: 21157908.1
(22) Anmeldetag: 18.02.2021
(51) Int. Cl.: B65B 5/06, B65B 5/10, B65B 35/50

(54) **VERFAHREN UND VORRICHTUNG ZUM AUSBILDEN VON VERPACKUNGSSTAPELN**
METHOD AND DEVICE FOR FORMING PACKAGING STACKS
PROCÉDÉ ET DISPOSITIF DE FORMATION D'EMPILEMENTS D'EMBALLAGE

(43) Veröffentlichungstag der Anmeldung: 24.08.2022
(60) Teilanmeldung: 22167608.3
(73) Patentinhaber: Teepack Spezialmaschinen GmbH & Co. KG, 40667 Meerbusch (DE)
(72) Erfinder: Knops, Hans, 47839 Krefeld (DE); Lambertz, Stefan, 50354 Hürth (DE)
(74) Vertreter: Grünecker Patent- und Rechtsanwälte PartG mbB

(56) Entgegenhaltungen:
- EP-A1- 3 431 400
- EP-B1- 2 812 250
- WO-A2-2013/026173
- DE-A1- 4 017 692
- DE-A1-102015 115 732
- US-A- 5 941 365

## Beschreibung

Die vorliegende Erfindung betrifft eine Vorrichtung zum Ausbilden von Verpackungsstapeln.

Aus EP 2 812 250 B1 ist ein Verfahren bekannt, bei welchem einzelne Aufgussbeutel von einer Förderstrecke entnommen werden, die mit einem umlaufenden Förderband zusammenwirkt, das die einzelnen zuvor hergestellten Aufgussbeutel von einer Beutelherstellungseinrichtung einer Stapelstation zuführt, in welcher die Beutel zu einem Verpackungsstapel gestapelt werden. Der zuvor erwähnte Stand der Technik hat eine durch zwei sich parallel erstreckende Förderbänder, die den jeweiligen Aufgussbeutel zwischen sich klemmen, gebildete Zuführstrecke, die den einzelnen Aufgussbeutel von einer Förderstrecke entnimmt und einer Einbringstation zuführt, in welcher mehrere Aufgussbeutel zu einem Verpackungsstapel gestapelt werden. Dazu ist ein verschwenkbarer Arm vorgesehen, der den einzelnen Aufgussbeutel von der Zuführstrecke rechtwinklig zu der Bewegungsrichtung der Förderbänder entnimmt und einer Stapelhalteeinrichtung zuführt, die den Stapel der Aufgussbeutel mit einer Stapelachse hält, die der Horizontalen entspricht.

Eine alternative Lösung ist aus DE 10 2015 115 732 A1 bekannt. Bei diesem Stand der Technik werden Aufgussbeutel auf einer sich horizontal erstreckenden Herstellungsstrecke durch Schneiden eines die Umhüllung des aufgussfähigen Materials bildenden Beutelmaterials verzeinzelt. Unmittelbar hinter der entsprechenden Schneidvorrichtung fallen die einzelnen Aufgussbeutel in eine drehbar gelagerte Aufnahme. Von dort wird der einzelne Beutel über einen Stempel in eine Stapelhalteeinrichtung ausgedrückt, die unterhalb der Aufnahme angeordnet ist und in der die Beutel mit einer Stapelachse in vertikaler Richtung übereinander abgelegt werden. Die Aufnahme hat Keilflächen, über welche der abgeworfene Aufgussbeutel innerhalb der Aufnahme zentriert wird. Unterhalb der Aufnahme sind Schieber vorgesehen, die die Unterseite der Aufnahme verschließen, um ein unbeabsichtigtes Herausfallen der Aufgussbeutel aus der Aufnahme zu verhindern, und die synchron mit dem vorfahrenden Stempel geöffnet werden

Bei diesem Stand der Technik dient die Aufnahme auch als Zwischenspeicher für abgeworfene Aufgussbeutel für den Fall, dass die Stapelhalteeinrichtung nicht unterhalb der Aufnahme vorgesehen ist und der dort gestapelte Verpackungsstapel aus der Stapelhalteeinrichtung entnommen wird. In diesem Fall sind die Schieber zusammengefahren und verschließen die untere Öffnung der Aufnahme.

Die vorbekannten Lösungen lassen noch Wünsche offen.

Der vorliegenden Erfindung liegt die Aufgabe zugrunde, eine Vorrichtung zum Ausbilden von Verpackungsstapeln enthaltend Aufgussbeutel anzugeben, die kompakt bauend ist und eine einfache und eine verlässliche Stapelung von Aufgussbeuteln erlaubt.

Zur Lösung des obigen Problems wird mit der vorliegenden Erfindung eine Vorrichtung mit den Merkmalen von Anspruch 1 angegeben. Bevorzugte Weiterbildungen sind in den Ansprüchen 2 bis 6 definiert

Die vorliegende Erfindung geht davon aus, dass die EP 2 812 250 B1 als gattungsgemäß anzusehen ist. Bei diesem Stand der Technik wird der Aufgussbeutel im Rahmen der Entnahmebewegung von der Förderstrecke zur Bildung des Verpackungsstapels in einer Stapelhalteeinrichtung angeordnet. Dementsprechend erfolgt die Übergabe des Aufgussbeutels unmittelbar von der Förderstrecke in die Stapelhalteeinrichtung. Die Förderstrecke ist dabei diejenige Strecke, die den fertigen Aufgussbeutel von der Beutelherstellungseinrichtung ausschleust und unmittelbar einer Entnahmestation zuführt, in welcher der Aufgussbeutel von der Förderstrecke entnommen wird. Das Entnehmen erfolgt dabei durch eine Entnahmeeinrichtung, die auf den Aufgussbeutel einwirkt, um diesen in die Stapelhalteeinrichtung einzubringen. Die Entnahmeeinrichtung kann dabei auch das Stapeln der Beutel in der Stapelhalteeinrichtung bewirken.

Wie bei den aus dem Stand der Technik bekannten Lösungen kann die Stapelhalteeinrichtung der erfindungsgemäßen Vorrichtung beweglich sein, um diese von der Einbringstation in eine Ausbringstation zu überführen, in welcher der Verpackungsstapel aus der Stapelhalteeinrichtung entnommen wird. Der Verpackungsstapel besteht dabei aus einer vorbestimmten Anzahl von Aufgussbeuteln. Die hintereinander hergestellten Verpackungsstapel bestehen jeweils aus einer identischen Anzahl von Aufgussbeuteln.

Nach der vorliegenden Erfindung wird der zumindest eine Aufgussbeutel durch Klemmen in dem Zwischenspeicher gehalten. Die Klemmung ist dabei üblicherweise eine passive Klemmung. Hierzu ist eine Klemmeinrichtung vorgesehen, bei der die einander gegenüberliegende Klemmflächen einen Abstand haben, der geringer ist als die zugeordnete Abmessung des Aufgussbeutels. Die entsprechende Abmessung ist dabei üblicherweise Höhe und/oder Breite des Aufgussbeutels. Danach wird der Aufgussbeutel in der Klemmeinrichtung in vertikaler Ausrichtung geklemmt gehalten. Die Klemmflächen werden bevorzugt durch sich in Einbringrichtung, d.h. im Wesentlichen in der Horizontalen erstreckenden Rippen gebildet, die einander gegenüberliegen. Die Rippen sind bevorzugt aus einem Kunststoff, insbesondere einem harten Kunststoff oder Metall gebildet, sodass der jeweilige Aufgussbeutel mit geringer Reibung an den Rippen vorbeigleiten kann, wenn der Aufgussbeutel - wie dies die Regel ist - durch die Entnahmeeinrichtung von der Förderstrecke unmittelbar in die Stapelhalteeinrichtung verbracht wird.

Die Rippen sind üblicherweise gebogen ausgebildet, wobei das vordere, zuerst mit dem Aufgussbeutel in Kontakt kommende Ende der Rippen eine stärkere vertikale Ausrichtung als ein hinterer Bereich der Rippen hat, sodass dem Aufgussbeutel beim Vorbeigleiten an den Rippen und geführt durch die Rippen eine stärkere horizontale Bewegungsrichtung aufgeprägt wird. Gemäß einer bevorzugten Weiterbildung hat die erfindungsgemäße Vorrichtung eine Beutelführung. Diese Beutelführung ist angepasst ausgebildet, um einem im Wesentlichen vertikal bewegten Aufgussbeutel, der aufrecht steht, eine zunehmend horizontale Bewegungskomponente aufzuzwingen. Die entsprechende Beutelführung befindet sich zwischen der Förderstrecke und der Stapelhalteeinrichtung. Die Beutelführung kann gleichzeitig auch die Klemmeinrichtung ausbilden. Die Beutelführung kann die zuvor diskutierten Rippen ausbilden bzw. umfassen. So werden von der Förderstrecke in die Stapelhalteeinrichtung unmittelbar überführte Beutel durch die Beutelführung in eine horizontale Bewegung überführt, in welcher die Beutel innerhalb der Stapelhalteeinrichtung hintereinander gestapelt werden. Wird indes die Stapelhalteeinrichtung entleert, ergibt sich eine Klemmung der jeweiligen Aufgussbeutel in der Klemmeinrichtung. So ist bei dieser konkreten Ausgestaltung die Beutelführung auch innerhalb des Zwischenspeichers vorgesehen.

Die Rippen können bevorzugt mit Kerben versehen sein. Die Kerben erstrecken sich üblicherweise in der Vertikalen. Zu jedem Beutel sind auf gegenüberliegenden Seiten zu jeder Rippe zumindest je eine Kerbe vorgesehen. Mitunter können auch mehrere Kerben auf einer Seite eines in dem Zwischenspeicher vorgesehenen Aufgussbeutels diesem jeweils zugeordnet sein. Ist der Aufgussbeutel als Doppelkammerbeutel ausgebildet, so ist bevorzugt zu jeder Kammer auf gegenüberliegenden Seiten jeweils eine Kerbe vorgesehen, in welcher der Rand der entsprechenden Kammer jeweils aufgenommen sein kann. Jedenfalls sind durch die Kerben die Aufgussbeutel in dem Zwischenspeicher auch in gewisser Weise formschlüssig zwischengespeichert.

Bei der erfindungsgemäßen Lösung kann die Entnahmeeinrichtung mit einem Zähler und einem Sensor versehen sein, der mit einer Steuerung zu der Entnahmeeinrichtung datenmäßig verbunden ist, um die Entnahmeeinrichtung nur dann zu aktivieren, wenn tatsächlich ein Aufnahmeplatz auf der Förderstrecke mit einem fertiggestellten Aufgussbeutel belegt ist. So kann das Signal des Sensors und/oder die Betätigung der Entnahmeeinrichtung als Zähler für diejenigen Aufgussbeutel Eingang in eine Maschinensteuerung dienen, die bei Erreichen der Anzahl von Aufgussbeuteln die Stapelhalteeinrichtung von der Einbringstation in die Ausbringstation überführt.

Im Rahmen der Benutzung der erfindungsgemäßen Vorrichtung kann jedenfalls der fertig hergestellte Beutel von der dies bewirkenden Beutelherstellungseinrichtung unmittelbar über die eine Förderstrecke der Entnahmestation zugeführt, wo der Aufgussbeutel von der Förderstrecke entnommen wird. Das Entnehmen erfolgt in vorbestimmter kontrollierter Weise durch die Entnahmeeinrichtung. Das Verbringen des Beutels im Rahmen der Entnahmebewegung unmittelbar in die Stapelhalteeinrichtung verkürzt die Bewegungsbahnen. Dabei wird der Aufgussbeutel nach dem Entnehmen von der Förderstrecke nur einmal gehandhabt, um diesen in die Stapelhalteeinrichtung zu überführen.

Die Benutzung der Vorrichtung nach der vorliegenden Erfindung erweist sich danach als zeit- und raumsparend. Gegenüber dem Stand der Technik werden weniger Anlagenkomponenten benötigt, um einen Verpackungsstapel zu bilden.

Gegenüber dem Stand der Technik nach DE 10 2015 115 732 A1 wird auf ein Abfallen der Aufgussbeutel unter Schwerkraft in eine Aufnahme verzichtet. Die erfindungsgemäße Vorrichtung wird üblicherweise so genutzt, dass die Beutel mit ihrer Haupterstreckungsrichtung in der Vertikalen ausgerichtet sind. Die Beutel stehen dementsprechend bevorzugt in der Stapelhalteeinrichtung. Die Stapelachse der hintereinander vorgesehenen Aufgussbeutel erstreckt sich danach bevorzugt in der Horizontalen. Die Aufgussbeutel werden dementsprechend in einer horizontalen Bewegung in die Stapelhalteeinrichtung eingeschoben.

Die erfindungsgemäße Vorrichtung zeichnet sich durch eine Entnahmeeinrichtung aus, die zum Verbringen des Aufgussbeutels von der Förderstrecke zu der Stapelhalteeinrichtung angepasst ausgebildet ist.

Der Zwischenspeicher kann eine Kapazität zur Zwischenspeicherung von zwischen einem und vier, bevorzugt drei Aufgussbeuteln haben. In dem Zwischenspeicher ist der wenigstens eine Aufgussbeutel bevorzugt in einer Ausrichtung angeordnet, die der Ausrichtung des Aufgussbeutels in dem Verpackungsstapel entspricht. Diese Ausrichtung ist bevorzugt eine vertikale Ausrichtung, bei welcher die Oberflächen des Aufgussbeutels mit der größten Fläche sich im Wesentlichen in der Vertikalen erstrecken. Der Aufgussbeutel steht dementsprechend auf einer Kante. Die größte Fläche des Beutels dient dementsprechend als Anlagefläche für die in der Stapelhalteeinrichtung gegeneinander anliegenden Aufgussbeutel.

Gemäß einer bevorzugten Benutzung der erfindungsgemäßen Vorrichtung wird der auf der Förderstrecke befindliche Aufgussbeutel über ein Umlenkrad von einer im Wesentlichen horizontalen Ausrichtung in eine im Wesentlichen vertikale Ausrichtung nach unten umgelenkt. Die im Rahmen dieser Umlenkung erzeugte Fliehkraft wird genutzt, um den Aufgussbeutel mit einer horizontalen Geschwindigkeitskomponente von der Förderstrecke zu trennen. Die Förderstrecke kann dabei zusätzlich noch über das Umlenkrad über die Vertikale hinaus umgelenkt sein, sodass auch hierdurch ein zusätzlicher Abstand zwischen der Förderstrecke und dem Aufgussbeutel im Rahmen des Trennens von Aufgussbeutel und Förderstrecke geschaffen wird. Dabei wird die Förderstrecke bevorzugt durch ein umlaufendes Band gebildet, auf welchem der Aufgussbeutel aufliegt. Durch die horizontale Geschwindigkeitskomponente wird der Aufgussbeutel in Richtung auf die Stapelhalteeinrichtung bewegt. So wird ein Teil der kinematischen Energie des Aufgussbeutels genutzt, um den Aufgussbeutel im Rahmen des Entnehmens von der Förderstrecke in Richtung auf die Stapelhalteeinrichtung zu überführen.

Im Rahmen dessen wird der Aufgussbeutel bevorzugt in einer kontinuierlichen Bewegung von der Förderstrecke entnommen und der Stapelhalteeinrichtung zugeführt. Diese befindet sich üblicherweise tangential zu der Förderstrecke. Die durch die Stapelhalteeinrichtung vorgegebene Stapelrichtung verläuft dementsprechend in etwa orthogonal zu der Förderstrecke. Die Stapelrichtung ist dabei diejenige Richtung, in welcher die jeweiligen Aufgussbeutel in der Stapelhalteeinrichtung gegeneinander angelegt werden. Die Stapelrichtung entspricht der Längserstreckungsrichtung der Stapelhalteeinrichtung, insbesondere der Längserstreckungsrichtung eines Schachtes zum Stapeln der einzelnen Aufgussbeutel.

Als kontinuierliche Bewegung im Sinne dieser Weiterbildung wird insbesondere eine Bewegung des Aufgussbeutels verstanden, die ohne Unterbrechung erfolgt, sodass der Aufgussbeutel vom Entfernen von der Förderstrecke bis zum Einbringen in die Stapelhalteeinrichtung in Bewegung bleibt. Dabei wird üblicherweise eine vornehmlich horizontale Bewegung des Massepunktes des Aufgussbeutels kontinuierlich in eine vornehmlich vertikale Bewegung umgelenkt, sodass die Beutel in vertikaler Richtung gestapelt werden. Im Rahmen dieser kontinuierlichen Bewegung behält der Aufgussbeutel vorzugsweise seine Ausrichtung bei.

Vorzugsweise werden im Rahmen der Benutzung der erfindungsgemäßen Vorrichtung die Aufgussbeutel in im Wesentlichen vertikaler Ausrichtung von der Förderstrecke entfernt, bevorzugt vor den Zwischenspeicher abgeworfen. In Folge dessen bewegen sich die Aufgussbeutel in Richtung auf den Zwischenspeicher mit einer vertikalen Geschwindigkeitskomponente, die aufgrund der Trägheit der Aufgussbeutel und der entsprechenden kinematischen Vorgabe durch die Förderstrecke und/oder die Schwerkraft vorgegeben ist. Wie oben herausgearbeitet, kann der Aufgussbeutel beim Trennen von der Förderstrecke eine vertikale und eine horizontale Geschwindigkeitskomponente haben, wobei die horizontale Geschwindigkeitskomponente jedenfalls auch durch die kinematischen Vorgaben der Förderstrecke bewirkt wird. Ergänzend oder alternativ kann auch eine Führung vorgesehen sein, welche dem Aufgussbeutel eine zunehmend horizontale Bewegung aufdrängt, wenn dieser von der Förderstrecke getrennt und in Richtung auf die Stapelhalteeinrichtung zubewegt wird. Die Fallstrecke wird üblicherweise seitlich und auch unterseitig begrenzt. Das Abwerfen erfolgt so, dass jeder Aufgussbeutel bereits im Wesentlichen diejenige Ausrichtung im Schwerefeld der Erde einnimmt, die der Aufgussbeutel auch in dem Verpackungsstapel hat.

Die Anordnung des Aufgussbeutels vor dem Zwischenspeicher ist dahingehend zu verstehen, dass der Aufgussbeutel sich in Stapelrichtung vor dem Zwischenspeicher befindet. Die Stapelrichtung erstreckt sich vorzugsweise in der Horizontalen.

Gemäß einer bevorzugten Benutzung der vorliegenden Erfindung wird der im Fall befindliche Aufgussbeutel von einem Stapelstempel mitgenommen. Dabei wird die näherungsweise vertikale Flugbahn des Aufgussbeutels durch eine Horizontalkomponente verändert, die durch den Stapelstempel aufgebracht wird und durch welche der Aufgussbeutel näher an den Einlass des Zwischenspeichers herangebracht wird.

Dazu wird die Förderstrecke, die bevorzugt durch ein Förderband gebildet ist, der Entnahmestation unmittelbar vorgelagert umgelenkt, so dass das Förderband von einer sich im Wesentlichen horizontal erstreckenden Ausrichtung über die Vertikale hinaus nach unten umgelenkt ist. Das Förderband ist dabei außenseitig bevorzugt von einer Umlenkhaube begrenzt, so dass die einzelnen Aufgussbeutel auch im Bereich der Umlenkung in dem jeweiligen Gefach des Förderbandes verbleiben. Das Gefach wird dabei bevorzugt zwischen zwei Stegen des Förderbandes gebildet, die zwischen sich jeweils einen Aufgussbeutel aufnehmen können und von dem Förderband abragen.

Durch die Umlenkung des Förderbandes trennen sich die Beutel hinter der Umlegung von dem Förderband in eine Aufnahme, die zur Aufnahme des Aufgussbeutels angepasst ausgebildet ist. Diese Aufnahme befindet sich zwischen dem Zwischenspeicher und dem Stapelstempel, der Teil der Entnahmeeinrichtung ist und der alternierend bis in den Zwischenspeicher und üblicherweise darüber hinaus bis in die Stapelhalteeinrichtung beweglich ist. Der Stapelstempel weist dabei bevorzugt zwei Stapelwangen auf, die zwischen sich das Förderband aufnehmen und unter Mitnahme des Aufgussbeutels in Richtung auf den Zwischenspeicher beweglich sind.

Im Hinblick auf eine sichere Halterung der einzelnen in der Stapelhalteeinrichtung gestapelten Aufgussbeutel weist diese ein Stapelgehäuse auf, an dem Klinken verschwenkbar gelagert sind. Die entsprechenden Klinken sind gegenüberliegend zueinander verschwenkbar befestigt. Die entsprechenden Klinken bilden einen Anschlag für einen vordersten Aufgussbeutel aus, der in einem Stapelschacht gehalten ist. Dieser Stapelschaft bildet die Aufnahme für die gestapelten Aufgussbeutel. Der Stapelschacht wird von dem Stapelgehäuse ausgebildet und von diesem umgeben. Der Stapelschacht ist in der Einbringstation unterseitig zumindest mit einem Anschlag versehen, der ein Hindurchrutschen einzelner Aufgussbeutel im Rahmen des Stapelns verhindert. Der entsprechende Anschlag befindet sich in der Einbringstation in dem Boden des Stapelgehäuses. Dieser Boden ist allerdings auch durchlässig für eine Ausbringeinrichtung, die in der Ausbringstation in das Stapelgehäuse eingreift, üblicherweise nachdem die Stapelhalteeinrichtung um eine Schwenkachse um 90° verschwenkt wurde, die sich in der Horizontalen erstreckt, sodass eine in der Einbringstation nach oben zeigende Öffnung nach unten kommt, durch welche der Verpackungsstapel insgesamt aus der Stapelhalteeinrichtung ausgebracht wird, bspw. unmittelbar in eine Kartonverpackung, die den Verpackungsstapel in sich aufnimmt.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
Fig. 1 eine leicht perspektivische Draufsicht einer Bedienseite eines Ausführungsbeispiels einer Beutelherstellungsvorrichtung;
Fig. 2 eine Seitenansicht einer Entnahmestation von Aufgussbeuteln, die in der Beutelherstellungsvorrichtung nach Fig. 1 hergestellt worden sind;
Fig. 3 ein Detail nach Fig. 2 in vergrößerter Darstellung mit einem vergrößerten Detail der Rippen;
Fig. 4 das Detail nach Fig. 3 in einer perspektivischen Seitenansicht;
Fig. 5A-5C eine perspektivische Seitenansicht für ein erstes Ausführungsbeispiel einer Stapelhalteeinrichtung beim Entleeren;
Figuren 6a/b eine perspektivische Seitenansichten eines zweiten Ausführungsbeispiels einer Stapelhalteeinrichtung;
Fig. 7A-7C die in Fig. 6 gezeigte Stapelhalteeinrichtung im Betrieb mit eine Einrichtung zum Formen einer Kartonverpackung und
Fig. 8 eine perspektivische Ansicht eines in der Vorrichtung nach den Figuren 1 bis 7C hergestellten Beutels.

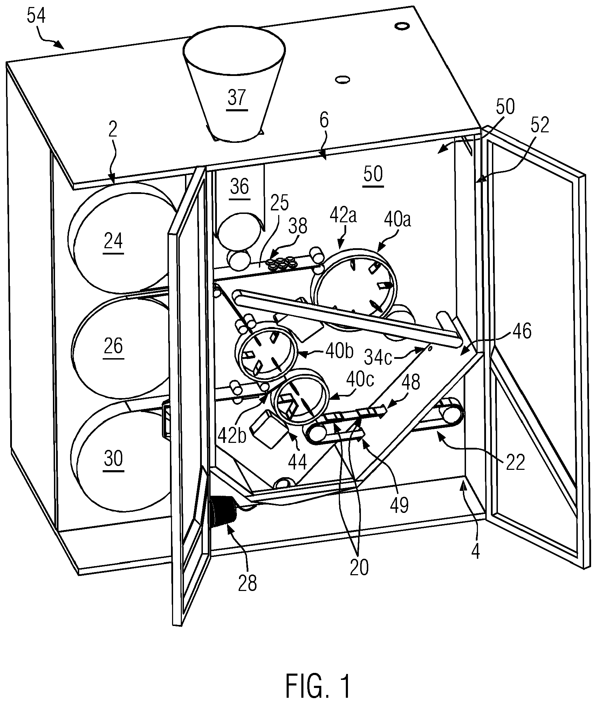

Figur 1 zeigt die Draufsicht auf ein Ausführungsbeispiel einer Vorrichtung zur Herstellung von mit aufgussfähigem Material befüllten Beuteln, die im wesentlichen drei Bereiche hat, nämlich einen Vorratsbereich 2 am linken Rand, einen Produktbereich 4 am rechten Rand und einen Arbeitsbereich 6 zwischen den Vorratsbereich 2 und dem Produktbereich 4.

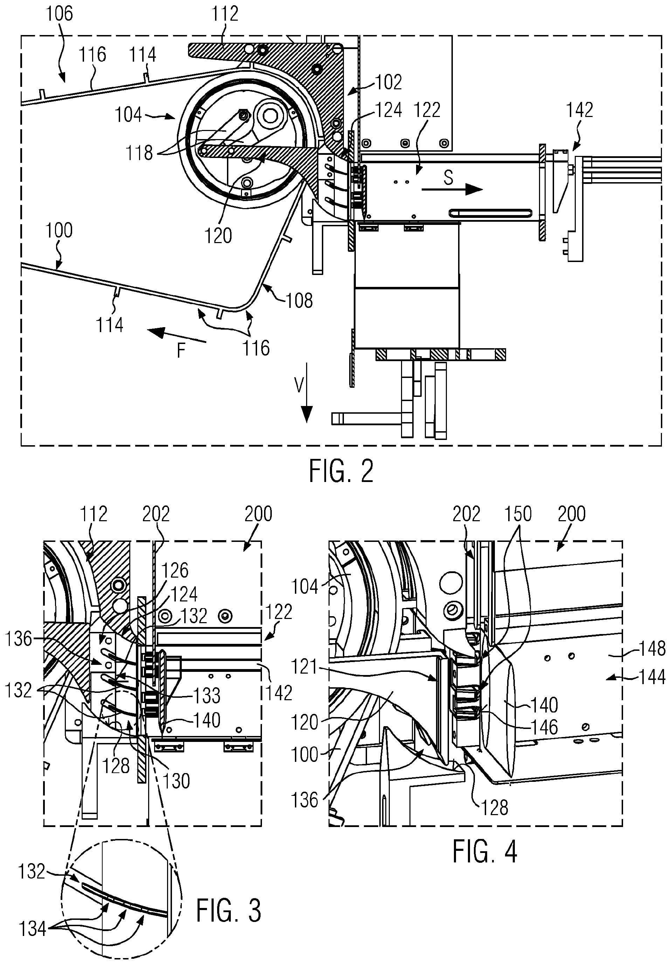

Die Herstellung der Beutel erfolgt durch Entnahme von Verbrauchsmaterial von dem Vorratsbereich 2, welches in dem Arbeitsbereich 6 zu Beuteln verarbeitet wird. Ein Beispiel für einen solchen Beutel ist in Figur 4 dargestellt. Dort ist der Beutel mit Bezugszeichen 8 gekennzeichnet. Bezugszeichen 10 kennzeichnet ein Etikett, welches über einen Faden 12 mit dem Beutel 8 verbunden ist. Die Einheit aus Beutel 8, Etikett 10 und Faden 12 ist in einer Aromaverpackung 14 aufgenommen, die durch ein feuchtigkeitsundurchlässiges Folienmaterial gebildet ist, das an einer Kante 16 um den Beutel 8 gelegt und durch eine U-förmige Schweißnaht 18 verschlossen ist.

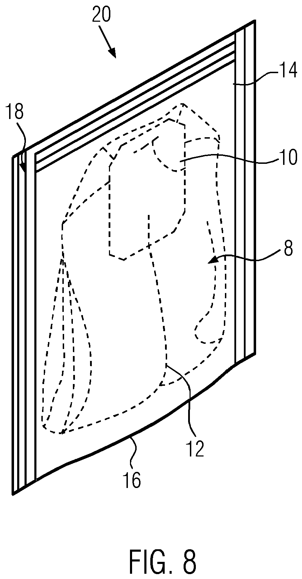

Das in Figur 8 gezeigte Produkt wird nachfolgend als fertiger Aufgussbeutel 20 bezeichnet. Der fertige Aufgussbeutel 20 wird über eine Förderstrecke 22 in Form eines schematisch dargestellten Förderbandes, zu dem Details den Figuren 2 ff. zu entnehmen sind, von dem Arbeitsbereich 6 zu dem Produktbereich 4 verbracht. Am Ende dieser Förderstrecke 22, die in den Figuren 2 ff. mit Bezugszeichen 100 gekennzeichnet ist, befindet sich eine in Figur 1 nicht gezeigte Entnahmestation nach den Figuren 2 ff.

In dem Vorratsbereich 2 ist ein Vorrat 24 für Beutelmaterial 25, ein Vorrat 26 für die Etiketten 10, ein Vorrat 28 für den Faden 12 und ein Vorrat 30 für die Aromaverpackung 14 zu erkennen, die bei der Herstellung der fertigen Aufgussbeutel 20 als Verbrauchsmaterialien verwendet werden. Diese jeweiligen Verbrauchsmaterialien sind auf jeweils einer Rolle vorgesehen und werden im Rahmen der Herstellung davon abgerollt.

Der Vorratsbereich 2 weist Führungen für die einzelnen Bahnen des Verbrauchsmaterials auf. Das Verbrauchsmaterial wird zwischen dem Vorratsbereich 2 und dem Arbeitsbereich 6 durch eine erste Trennwand 32 hindurchgeführt. Diese Trennwand 32 hat verschiedene mit Bezugszeichen 34 gekennzeichnete Öffnungen für das Hindurchführen des jeweiligen Verbrauchsmaterials erlauben. Die Abmessung der jeweiligen Öffnung 34 ist so gewählt, dass das jeweilige Verbrauchsmaterial gerade durch die erste Trennwand 32 hindurchgeführt werden kann. Jeder Öffnung 34 kann ein Luftvorhang zugeordnet sein, durch den ein unerwünschter Durchtritt von Luft von dem Arbeitsbereich 6 in den Vorratsbereich 2 bzw. den Produktbereich 4 verhindert werden kann. Bei dem gezeigten Ausführungsbeispiel weist die den Arbeitsbereich 6 linksbegrenzende Trennwand 32 eine Öffnung 34a für das Beutelmaterial 25, eine Öffnung 34b für die Etiketten 10 und eine Öffnung 34d für die Aromaverpackung 14 auf.

In dem Arbeitsbereich 6 wird das Beutelmaterial 25 auf Höhe einer Portioniereinrichtung 36 mit einem Vorrat 37 für aufgussfähiges Material jeweils mit einer Charge des aufgussfähigen Materials belegt. Dabei wird das Beutelmaterial 25 auf einer horizontalen Strecke 38 geführt. Nach den Belegen des Beutelmaterials 25 wird dieses zu einem Schlauch unter Einschluss der Charge umgeformt. Das als Endlosmaterial zugeförderte Beutelmaterial 25 wird zu Längenstücken geschnitten und damit vereinzelt. Am Ende der horizontalen Strecke 38 werden die so vorbereiteten Längenstücks des Beutelmaterials 25 einem ersten Transportrad 40a übergeben.

Auf Höhe einer Einbringstation 42a wird das Beutelmaterial 25 zur Ausbildung des als Doppelkammerbeutel ausgebildeten Beutels 8 radial nach innen in Richtung der Mittellängs- bzw. Drehachse des ersten Transportrades 40a verbracht. Das erste Transportrad 40a dreht im Uhrzeigersinn und führt das jeweilige Beutelmaterial 25 verschiedenen Stationen zu, in denen der Beutel kopfseitig verschlossen, mit dem Faden 12 und dem Etikett 10 verbunden wird.

Von dem ersten Transportrad 40a wird der so erstellte und kopfseitig bearbeitete Beutel 8 auf ein im Gegenuhrzeigersinn drehendes zweites Transportrad 40b überführt, wobei der Beutel 8 zwischen den beiden Transporträdern 40a, 40b verschwenkt wird, sodass der Beutel 8 mit seinem Boden zuerst in radialer Richtung in das zweite Transportrad 40b eingebracht wird. Dort wird der Beutel 8 mit dem Etikett 10 verbunden und so innerhalb zweiten Transportrades 40b gedreht wird, dass der beim Einbringen radial nach innen orientierte Boden des Beutels 8 radial nach außen orientiert ist. In dieser Ausrichtung, d.h. um 180 ° gegenüber der Einbringrichtung verschwenkt, wird der so vorbereitete Beutel 8 mit dem Boden nach vorne aus dem zweiten Transportrad 40b ausgefördert und einem dritten Transportrad 40c zugeführt. Dabei wird der Beutel an einer Umhüllungsstation 42b zugeführt, in welcher die Aromaverpackung 14 bei Ausbildung der Kante 16 um den Beutel 8 sowie das Etikett 10 und dem Faden 12 gelegt wird. Danach erfolgt das Versiegeln der Aromaverpackung 14 in einer Siegelstation 44 des Ausbilden der U-förmigen Naht 18. Die Siegelstation 44 ist einem dritten Transportrad 40c zugeordnet, an welchem der Beutel 8 beim Versiegeln gehalten und transportiert wird.

Der so hergestellte fertige Beutel 20 wird schließlich auf die Förderstrecke 22 gelegt und dem Produktbereich 4 zugeführt. Dazu weist eine zweite Trennwand 46 eine Beuteldurchführöffnung 48 und eine Rückführöffnung 49 für die Förderstrecke 22 auf.

Die zuvor als Teil des Arbeitsbereiches 6 beschriebenen Komponenten liegen vor einer Basisplatte 50, die die einzelnen Komponenten trägt und diese ggf. von Antrieben trennt, die auf der gegenüberliegenden Seite der Basisplatte 50 vorgesehen sind. Der dem Benutzer zugewandte Bereich der Basisplatte 50 trennt eine dort vorgesehene Bedienseite 52 von einer Antriebsseite 54 an der Rückseite der Vorrichtung.

Die Fig. 2 zeigt Teile des die Transportstrecke 22 nach Figur 1 ausbildenden Förderbandes, welches in den Figuren 2 ff mit Bezugszeichen 100 gekennzeichnet ist, das eine in Figur 1 mit Bezugszeichen 101 gekennzeichnete Beutelherstellungseinrichtung mit einer Entnahmestation 102 verbindet. In der Entnahmestation 102 wird das Förderband 100 über ein Umlenkrad 104 umgelenkt, so dass ein mit Bezugszeichen 106 gekennzeichneter, sich im Wesentlichen horizontal erstreckender Abschnitt des Förderbandes 100 in senkrechter Richtung umgelenkt wird. Der hinter dem Umlenkrad 104 in Förderrichtung vorgesehene umgelenkte Abschnitt 106 ist über die Vertikale hinaus umgelenkt, die mit Bezugszeichen 110 gekennzeichnet ist. Das Förderband 100 ist außenumfänglich von einer Umlenkhaube 112 umgeben, die zwischen sich und dem Umlenkrad 104 einen Spalt ausbildet, in den das Förderband 100 und die davon abstehenden Stege 114, die zwischen sich ein Gefach 116 zur Aufnahme des in den Figuren 2 bis 7 mit Bezugszeichen 140 gekennzeichneten fertigen Aufgussbeutels ausbilden, einfahren können. Der Spalt ist so bemessen, dass die Aufgussbeutel nicht aus ihrem jeweiligen Gefach 116 herausgeschleudert werden können, wenn das Förderband 100 umgelenkt wird. An einem in Förderrichtung F hinteren Ende hat der Spalt in etwa eine vertikale Erstreckung.

In Fig. 2 sind innerhalb des Umlenkrades 104 zwei sich im Grunde parallel erstreckende Schwenkarme 118 zu erkennen, die einen Stapelstempel 120 tragen, der durch Verschwenken der Schwenkarme 118 zyklisch und im Wesentlichen in horizontaler Richtung hin und her beweglich ist und vorliegend ein Beispiel einer Entnahmeeinrichtung 121 ausbildet. Dabei zeigen die Fig. 2 und 3 eine Ausgangslage, in welcher der Stapelstempel 120 maximal nach links, d. h. weg von einer Stapelhalteeinrichtung 122 wegbewegt ist.

Der Stapelhalteeinrichtung 122 in Einbringrichtung vorgelagert ist ein Zwischenspeicher 124 vorgesehen. Zwischen dem Zwischenspeicher 124 und dem Umlenkrad 104 ist eine zur Aufnahme eines Aufgussbeutels angepasst ausgebildete Aufnahme 126 ausgebildet. Diese Aufnahme 126 wird unterseitig von einem Aufnahmeboden 128 begrenzt, der rampenförmig ausgebildet ist und sich zu der Stapelhalteeinrichtung 122 hin neigt. Der Aufnahmeboden 128 ist in dem gezeigten Ausführungsbeispiel in einer Querschnittsansicht in einer die Bewegungsrichtung des Stapelstempels 120 enthaltenden Ebene mit einer konkaven Oberfläche versehen.

Der Zwischenspeicher 124 hat zwei sich gegenüberliegende Wandsegmente 130, von denen in den Fig. 2 und 3 das in der Zeichnung vordere Wandsegment weggenommen ist. Üblicherweise ist der Zwischenspeicher 124 durch ein rechteckiges rahmenförmiges Bauteil gebildet. Die einander gegenüberliegenden, sich vertikal erstreckenden Innenflächen der Wandsegmente 130 weisen mehrere Rippen 132 auf, die nach innen von den jeweiligen Wandsegmenten 130 abragen. Wie Fig. 3 verdeutlicht, sind die mehreren Rippen 132 in paralleler Anordnung zueinander vorgesehen. Die Rippen 132 sind jeweils in Richtung auf die Stapelhalteeinrichtung 122 nach unten geneigt. Die Rippen 132 verlaufen gekrümmt. Ein vorderes, der Aufnahme 126 zugewandtes Ende der Rippen 132 hat eine stärkere vertikale Ausrichtung als ein hinteres, der Stapelhalteeinrichtung 122 zugewandtes Ende. So bilden die entsprechenden Rippen 132 ein Ausführungsbeispiel einer Beutelführung 133 im Sinne der vorliegenden Erfindung aus. Die stärkere vertikale Ausrichtung des vorderen Endes der Rippen klemmt den von dem Förderband 100 abgeworfenen Aufgussbeutel 140, wenn dieser mit einer vorwiegend vertikalen Geschwindigkeitskomponente nach unten bewegt wird, nachdem der Aufgussbeutel 140 das Umlenkrad 104 passiert hat. Durch die Fliehkraft hat der Aufgussbeutel 140 danach auch eine gewisse horizontale Bewegungskomponente. Die Neigung der Rippen 132 an ihrem vorderen Ende ist auf die resultierende Bewegung des Aufgussbeutels 140 angepasst ausgebildet. Diese wird auch durch den Stapelstempel 120 beeinflusst, der sich innerhalb der Aufnahme 126 gegen eine Hauptseitenfläche des Aufgussbeutels 140 anlegt, um diesen horizontal in Richtung auf die Stapelhalteeinrichtung 122 zu schieben.

Für die Zwischenspeicherung von mehreren Aufgussbeuteln 140 hintereinander zwischen den Rippen 132 weisen diese mehrere, jeweils in Längsrichtung der Rippen 132 hintereinander vorgesehene Kerben 134 auf, die sich in vertikaler Richtung erstrecken (vgl. Fig. 4). Der konkav gekrümmte Aufnahmeboden 128 kann ebenfalls als Teil der besagten Beutelführung 133 angesehen werden. Allerdings kann der Beutel auch ohne Berührung des Aufnahmebodens 128 in die Stapelhalteeinrichtung 122 überführt werden.

Durch die einander gegenüberliegenden Wandsegmente 130 mit den zugehörigen Rippen 132 ist eine Klemmeinrichtung 136 innerhalb der Aufnahme 126 für aufrecht stehende Aufgussbeutel gebildet. Dabei kann ein einziger Aufgussbeutel 140 in jeweils einer der Kerben 134 der einander gegenüberliegenden Rippen 132 auch formschlüssig geklemmt und gehalten sein. In den Fig. 3 und 4 ist ein solcher aufrecht stehender, bereits in der Stapelhalteeinrichtung 122 aufgenommener fertiger Aufgussbeutel 140 erkennbar. Dieser Aufgussbeutel 140 wird in seiner aufrecht stehenden Ausrichtung in der Stapelhalteeinrichtung 122 durch einen Haltestempel 142 gehalten, der in einem Stapelschacht 144 in Stapelrichtung S beweglich ist. Der Haltestempel 142 kann beispielsweise ein pneumatisch vorgespannter Stempel sein, der sich passiv mit der Menge an in dem Stapelschacht 144 gestapelten Aufgussbeuteln 140 zurückzieht. Auf der gegenüberliegenden Seite liegt der jeweils zuletzt in den Stapelschacht 144 eingebrachte und damit vorderste Aufgussbeutel 140 der Stapelung gegen einen Anschlag 146 an. Dieser Anschlag 146 hat über die gesamte Höhe des Aufgussbeutels 140 verteilt vorgesehene Anschlagflächen und ist durch eine verschwenkbar an einem Stapelgehäuse 148 gelagerte Klinke 150 ausgebildet. Die Flächen der den Anschlag 146 jeweils ausbildenden Segmente der Klinke 150 sind nach vorne, den Eingang in den Stapelschacht 144 begrenzenden Ende konisch zulaufend ausgebildet. So ergibt sich eine trichterförmige Verengung, deren lichte Weite eingangsseitig größer als unmittelbar benachbart zu den Anschlägen 146 ist.

Zum Stapeln der zuvor hergestellten Aufgussbeutel 140 werden diese in den jeweiligen Gefachen 116 bei kontinuierlich drehendem Förderband 100 zugeführten Produkte am Ende der Umlenkhaube 116 vertikal nach unten freigegeben. Da das Förderband 100 bis hinter die Vertikale V umgelenkt wird, liegt das Förderband 100 und auch die Stege 114 hinter der Vertikalen V im Bereich der Aufnahme 126.

Der Stapelstempel 120 ist so mit dem Förderband 100 und dementsprechend dem Abwerfen der einzelnen Aufgussbeutel 140 synchronisiert, dass im Rahmen der Flugbewegung der Aufgussbeutel 140 der Stapelstempel 120 in die Aufnahme 126 fährt und dabei den Aufgussbeutel 140 mitnimmt. Der in vertikaler Richtung frei fallende Aufgussbeutel 140 erfährt dementsprechend durch den Stapelstempel 120 eine horizontale Geschwindigkeitskomponente. Der Aufgussbeutel 140 wird im Rahmen dieser Zuführbewegung in Richtung auf die Stapelhalteeinrichtung 122 zwischen die einander gegenüberliegenden Rippen 132 des Zwischenspeichers 144 gedrängt und dort geklemmt. Bei dem üblichen Gang des Verfahrens wird der Stapelstempel 142 bis in die Stapelhalteeinrichtung 122 verschwenkt. Dabei drücken gegenüberliegende Seitenränder des Aufgussbeutels 144 die Klinken 150 auseinander. Hat der Aufgussbeutel 140 die Klinken 150 passiert, so wird die Bewegung des Stapelstempels 120 umgedreht. Der Stapelstempel 142 drängt den zuletzt eingebrachten Aufgussbeutel 140 nach dem Zurückfedern der Klinken 150 gegen den Anschlag 146, der dementsprechend in seiner aufrecht stehenden Position in dem Stapelschacht 144 gehalten ist (vgl. Fig. 3, 4).

Ist die Anzahl der einen Verpackungsstapel 152 ausbildenden Aufgussbeutel 140 in dieser Weise in den Stapelschacht 144 eingebracht worden, wird dieser entleert, was nachstehend im Detail beschrieben wird.

Die Drehbewegung des Förderbandes 100 bleibt aber auch beim Entleeren der Stapelhalteeinrichtung 122 erhalten. Es werden weiterhin Aufgussbeutel 140 von dem Förderband 140 in die Aufnahme 126 abgeworfen. Dabei vollzieht der Stapelstempel 120 nur eine reduzierte horizontale Bewegung, in deren Rahmen der jeweilige Aufgussbeutel 140 in den Zwischenspeicher 144 eingebracht wird. Dort wird der Aufgussbeutel 140 zwischen den Rippen 132 und insbesondere formschlüssig auch durch Einbringen der gegenüberliegenden Ränder des Aufgussbeutels 140 in die Kerben 134 aufrecht stehend zwischengespeichert.

Bei dem gezeigten Ausführungsbeispiel wird der Stapelstempel 122 nur dann betätigt, wenn das jeweilige Gefach 116 auch mit einem Aufgussbeutel 140 gefüllt ist. So dient die Betätigung des Stapelstempels 120 auch dem Zählen der jeweils in Richtung auf die Stapelhalteeinrichtung 122 eingeschobenen Aufgussbeutel.

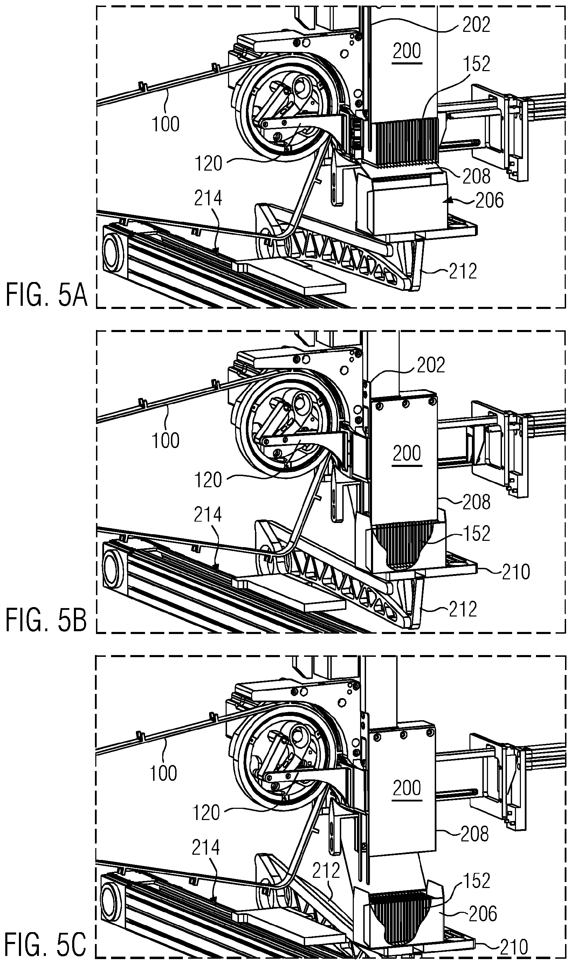

Das Entleeren der Stapelhalteeinrichtung nach dem zuvor gezeigten Ausführungsbeispiel wird nachfolgend anhand der Fig. 5A bis 5C erläutert.

Bei dem Ausführungsbeispiel nach den Fig. 5A bis 5C wird die Stapelhalteeinrichtung 122 ohne Lageveränderung entleert. Hierzu ist ein Einstößer200 vorgesehen, der mit einer Führungsgabel 202 fest verbunden und vertikal beweglich ist. Bei Erreichen der den Verpackungsstapel 152 ausbildenden Anzahl von Aufgussbeuteln 140, wird der Einstößer 200 nach unten bewegt. Dabei wird die Führungsgabel 202 vorlaufend zwischen den Zwischenspeicher 124 und den Stapelschacht 144 geführt, und zwar unmittelbar benachbart zu den Anschlägen 146 und somit dem in Stapelrichtung S vordersten Aufgussbeutel 140. Die Führungsgabel 202 wird bis in einer Kartonverpackung 206 eingebracht (vgl. Fig. 5B). Im Rahmen der Absenkbewegung des Einstößers 200 wird eine den Stapelschacht 144 unterseitig begrenzende Bodenklappe 208 nach unten und in Richtung auf die Kartonverpackung 206 in diese hinein verschwenkt. Die in den Figuren 5b und 5c teilweise weggenommen dargestellte Kartonverpackung 206 wird über einen Halteteller 210 gehalten, der an einem Schwenkarm 212 höhenbeweglich ist. Dieser Schwenkarm 212 ist auf einer Schiene 214 translatorisch beweglich gehalten.

Der herabfahrende Einstößer 200 drückt den Verpackungsstapel 152 in die Kartonverpackung 206 hinein. Mit zunehmender Absenkbewegung des Einstößers 200 wird der Halteteller 210 zusammen mit der Kartonverpackung 206 abgesenkt. Ist der Verpackungsstapel 152 vollständig in der Kartonverpackung 206 aufgenommen, ergibt sich eine gegenläufige Bewegung von Einstößer 200 und Halteteller 210.

Während dieser Entleerung des Stapelschachtes 144 verschließt die Führungsgabel 202 gleichzeitig auch den Zwischenspeicher 420. Der Stapelstempel 120 wird während der Entleerung der Stapelhalteeinrichtung 122 kontinuierlich weiter bewegt. Im Rahmen der Entleerung werden bis zu drei Aufgussbeutel 140 in den Zwischenspeicher eingespeichert. Beim Ausschieben des vierten Aufgussbeutels 140 in Richtung auf den Zwischenspeicher 124 ist bereits die Entleerung der Stapelhalteeinrichtung 122 abgeschlossen. Die Führungsgabel 202 hat den Durchgang in den Stapelschacht 144 freigegeben. Die Bodenklappe 208 ist wieder verschlossen, so dass der vierte Aufgussbeutel in den Stapelschacht 144 durch entsprechende Steuerung des Stapelstempels 120 hereingedrückt wird und die drei zuvor in dem Zwischenspeicher 124 gehaltenen Aufgussbeutel vor sich her in den Stapelschacht 144 drängt.

Währenddessen kann der Halteteller 210 mit der befüllten Kartonverpackung 206 translatorisch entlang der Schiene 214 bewegt und an einer anderen Position zur weiteren Verarbeitung von dem Halteteller 210 abgeschoben werden, der danach die Herstellung einer neuen Kartonverpackung 206 unterstützt und diese unter den Stapelschacht 144 in einem nächsten Zyklus verbringt.

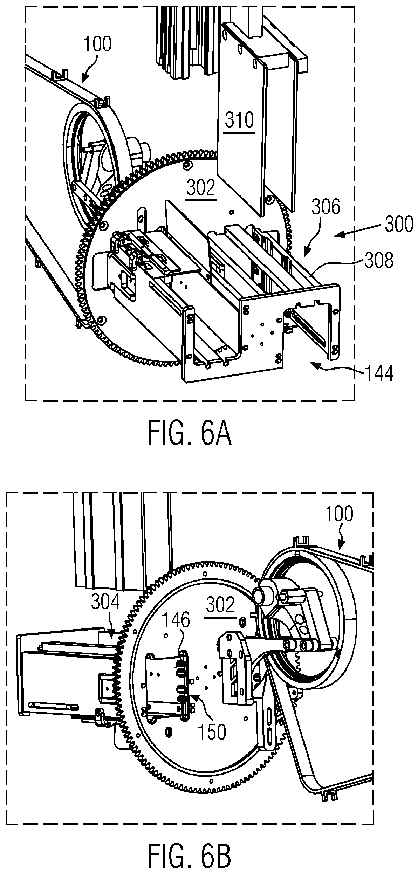

Eine alternative Stapelhalteeinrichtung 122 ist in den Figuren 6a und b gezeigt, die dort mit Bezugszeichen 300 gekennzeichnet ist. Diese Stapelhalteeinrichtung 300 hat zwei Scheiben 302, von denen in den Figuren 6a/6b nur eine einzige Scheibe 302 dargestellt ist, die zwischen sich jeweils zwei Stapelschächte 144 aufnehmen und halten. Die so gebildete Stapelhalteeinrichtung 300 ist um eine horizontale Achse, die den Mittelpunkt der beiden Scheiben 302 schneidet, verschwenkbar bzw. drehbar gelagert. So kann die Stapelhalteeinrichtung von einer Einbringstation 304 des jeweiligen Stapelschachtes 144 zu einer Ausbringstation 306 verschwenkt werden, in der der jeweilige Stapelschacht 144 entleert wird. Es versteht sich, dass der Stapelschacht 144 in der Ausbringstation 306 mit seiner Öffnung nach unten gerichtet ist. Der in Fig. 6 vorne gezeigte Stapelschacht 144 lässt einen geschlitzten Boden 308 erkennen, der für das Einbringen des Einstößers 310 in den Stapelschacht 144 angepasst ausgebildet ist. So kann der Einstößer 310 den Verpackungsstapel 152 nach unten aus dem Stapelschacht 144 in eine in den Figuren 6a und 6b nicht gezeigte Kartonverpackung 206 ausfördern und damit die Stapelhalteeinrichtung 122 an der Ausbringstation 306 entleeren.

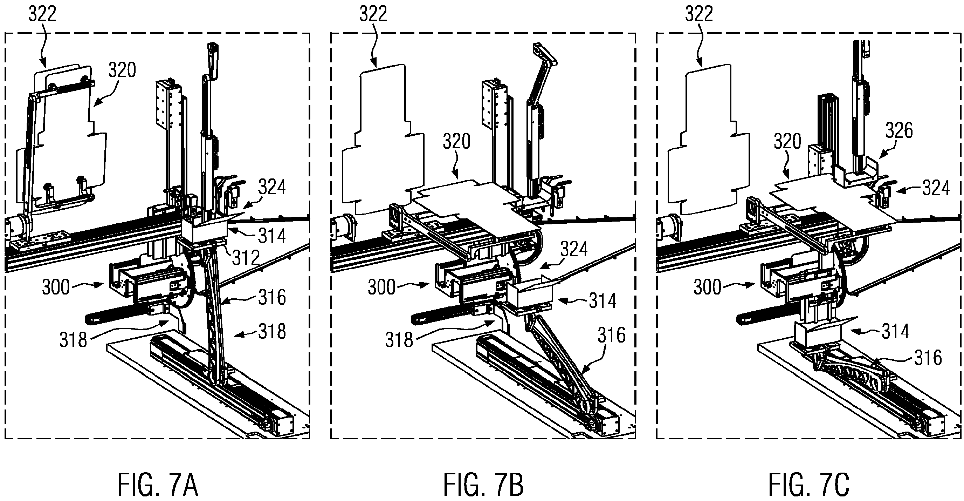

Weitere Einzelheiten der Einrichtung zum Verbringen des Verpackungsstapels in eine Kartonverpackung sind den Fig. 7A bis 7D zu entnehmen. Mit Bezugszeichen 312 ist dort ein Halteteller gekennzeichnet, auf dem eine Kartonverpackung 314 abgestützt werden kann. Dieser Halteteller 314 ist an einem Schwenkarm 316 verschwenkbar gelagert, der in Verlängerung der Stapelhalteeinrichtung 300 vorgesehen ist. Dem Schwenkarm 316 ist ein Schieber 318 zugeordnet, der die mit dem Verpackungsstapel 152 gefüllte Kartonverpackung von dem Halteteller 312 auf eine Transportstrecke für die Weiterverarbeitung der Kartonverpackung 314 abschiebt.

Mit Bezugszeichen 320 ist eine Zuschnittzufuhr gekennzeichnet, die eine Vielzahl von Zuschnitten 322 zur Herstellung der Kartonverpackungen 314 bereithält. Über die Zuschnittzufuhr 320 werden die Zuschnitte 322 einer Faltstation 324 mit einem Formstempel 326 zugeführt. Auf dem Weg dorthin werden die Zuschnitte 322 - wo erforderlich - mit Kleber versehen. In der Fallstation 324 fährt der Formstempel 326 herunter. Dabei werden Faltflächen wirksam, die aus dem zunächst ebenen Zuschnitt 322 eine Kartonverpackung 314 ausbilden, die auf dem Halteteller 312 abgesetzt ist (Fig. 7A).

Währenddessen dreht die Stapelhalteeinrichtung 300, um den mit dem Verpackungsstapel 152 gefüllten Stapelschacht 144 in die Ausbringstation 306 zu verbringen (vgl. Fig. 7B).

Nachdem der Halteteller 312 mit der Kartonverpackung 314 unterhalb des Stapelschachtes 144 angeordnet worden ist, fährt der Einstößer 310 herunter und drängt den Verpackungsstapel 152 - wie zuvor bereits beschrieben - in die darunter vorgesehene Kartonverpackung 314. Auch bei diesem Ausführungsbeispiel wird die Kartonverpackung 314 bei der Befüllung mit dem Verpackungsstapel 152 abgesenkt. Durch den Schieber 318 wird die mit dem Verpackungsstapel 152 gefüllte Kartonverpackung 314 von dem Halteteller 312 abgeschoben.

## Patentansprüche

1. Vorrichtung zum Ausbilden von Verpackungsstapeln (152) durch Stapeln von Aufgussbeuteln (140) mit einer Förderstrecke (100), auf der Aufgussbeutel (140) von einer Beutelherstellungseinrichtung (101) zu einer Entnahmestation (102) gefördert werden, einer der Entnahmestation (102) zugeordnete Entnahmeeinrichtung (121) und einer Stapelhalteeinrichtung (122; 300), wobei die Entnahmeeinrichtung (121) zum Verbringen der Aufgussbeutel (140) von der Förderstrecke (100) zu einer in einer Einbringstation (304) befindlichen Stapelhalteeinrichtung (122; 300) angepasst ausgebildet ist und mit einem Zwischenspeicher (124), der der in der Einbringstation (304) befindlichen Stapelhalteeinrichtung (122; 300) vorgelagert ist und zur Zwischenspeicherung von zumindest einem Aufgussbeutel (140) angepasst ausgebildet ist, **dadurch gekennzeichnet, dass** der Zwischenspeicher (124) eine auf gegenüberliegende Ränder des Aufgussbeutels (140) einwirkende Klemmeinrichtung (136) aufweist.

2. Vorrichtung nach Anspruch 1 **gekennzeichnet durch** eine zwischen der Förderstrecke (100) und der Stapelhalteeinrichtung (122, 300) vorgesehene Beutelführung (133), die einem aufrecht stehenden, im Wesentlichen vertikal bewegten Aufgussbeutel (140) eine zunehmend horizontale Bewegungskomponente aufzwingt.

3. Vorrichtung nach Anspruch 1 oder 2, **dadurch gekennzeichnet, dass** die Klemmeinrichtung (136) gegenüberliegende Rippen (132) aufweist, die auf die gegenüberliegenden Ränder des Aufgussbeutels (140) unter Verformung des Aufgussbeutels (140) einwirken.

4. Vorrichtung nach einem der Ansprüche 1 bis 3, **dadurch gekennzeichnet, dass** die Rippen (132) mit Kerben (134) versehen sind.

5. Vorrichtung nach einem der Ansprüche 1 bis 4, **dadurch gekennzeichnet, dass** die Stapelhalteeinrichtung (122, 300) eingangsseitig gegenüberliegende Klinken (150) aufweist, die schwenkbar an einem Stapelgehäuse (148) befestigt sind, das einen Stapelschacht (144) ausbildet und die einen Anschlag (146) für einen vordersten, in dem Stapelschacht (144) gehaltenen Aufgussbeutels (140) ausbilden.

6. Vorrichtung nach einem der Ansprüche 1 bis 5, **dadurch gekennzeichnet, dass** die Förderstrecke durch ein Förderband (100) gebildet ist, das der Entnahmestation (102) unmittelbar vorgelagert von einer sich im Wesentlichen horizontal erstreckenden Ausrichtung über die Vertikale (110) hinaus nach unten umgelenkt ist und dass unterhalb der Umlenkung des Förderbandes (100) eine zur Aufnahme eines Aufgussbeutels (140) angepasst ausgebildete Aufnahme (126) ausgebildet ist, die zwischen dem Zwischenspeicher (124) und einem Stapelstempel (120) vorgesehen ist, der alternierend durch den Zwischenspeicher (124) hindurch beweglich ist.

## Claims

1. Device for the formation of stacks of packagings (152) by stacking infusion bags (140) with a conveying stretch (100) on which infusion bags (140) are conveyed from a bag production device (101) to a removal station (102), a removal device (121) associated with said removal stations (102) and a stack holding device (122; 300), where said removal device (121) is configured to be adapted to move said infusion bags (140) from said conveying stretch (100) to a stack holding device (122; 300) disposed in an introduction station (304), and with a buffer store (124) which is disposed upstream of said stack holding device (122; 300) disposed in said introduction station (304) and is configured to be adapted to buffer at least one infusion bag (140), **characterized in that** said buffer store (124) comprises a clamping device (136) acting upon oppositely disposed edges of said infusion bag (140).

2. Device according to claim 1, **characterized by** a bag guide (133) which is provided between said conveying stretch (100) and said stack holding device (122, 300) and forces an increasingly horizontal motion component upon an infusion bag (140) standing upright and moved substantially vertically.

3. Device according to claim 1 or 2, **characterized in that** said clamping device (136) comprises oppositely disposed ribs (132) which act upon said oppositely disposed edges of said infusion bag (140) while deforming said infusion bag (140).

4. Device according to claim 3, **characterized in that** said ribs (132) are provided with notches (134).

5. Device according to one of the claims 1 to 4, **characterized in that** said stack holding device (122, 300) comprises oppositely disposed pawls (150) on the inlet side which are attached to be pivotable to a stack housing (148) forming a stacking slot (144) and which form a stop (146) for a leading infusion bag (140) held in said stacking slot (144).

6. Device according to one of the claims 1 to 5, **characterized in that** said conveying stretch is formed by a conveyor belt (100) which immediately upstream of said removal station (102) is deflected downwardly from an orientation extending substantially horizontally beyond the vertical direction (110), and that a receptacle (126) adapted to receive an infusion bag (140) is formed below the deflection of said conveyor belt (100) and is provided between said buffer store (124) and a stack punch (120) which is movable alternately through said buffer store (124).

## Revendications

1. Dispositif de formation d'empilements d'emballages (152) par empilements de sachets d'infusion (140) avec une ligne de transport (100) sur laquelle des sachets d'infusion (140) sont transportés depuis un dispositif de fabrication de sachets (101) jusqu'à un poste de prélèvement (102), un dispositif de prélèvement (121) associé au poste de prélèvement (102) et un dispositif de maintien d'empilement (122 ; 300), dans lequel le dispositif de prélèvement (121) est conçu de manière adaptée pour déplacer les sachets d'infusion (140) depuis la ligne de transport (100) jusqu'à un dispositif de maintien d'empilement (122 ; 300) se trouvant dans un poste d'introduction (304) et avec un réservoir intermédiaire (124) qui est monté en amont du dispositif de maintien d'empilement (122 ; 300) se trouvant dans le poste d'introduction (304) et qui est conçu de manière adaptée pour le stockage intermédiaire d'au moins un sachet d'infusion (140), **caractérisé en ce que** le réservoir intermédiaire (124) présente un dispositif de serrage (136) agissant sur des bords opposés du sachet d'infusion (140).

2. Dispositif selon la revendication 1, **caractérisé par** un guide de sachet (133) prévu entre la ligne de transport (100) et le dispositif de maintien d'empilement (122, 300), lequel guide impose une composante de déplacement de plus en plus horizontale à un sachet d'infusion (140) débout, déplacé sensiblement verticalement.

3. Dispositif selon la revendication 1 ou 2, **caractérisé en ce que** le dispositif de serrage (136) présente des nervures opposées (132) qui agissent sur les bords opposés du sachet d'infusion (140) avec déformation du sachet d'infusion (140).

4. Dispositif selon l'une quelconque des revendications 1 à 3, **caractérisé en ce que** les nervures (132) sont munies d'encoches (134).

5. Dispositif selon l'une quelconque des revendications 1 à 4, **caractérisé en ce que** le dispositif de maintien d'empilement (122, 300) présente des cliquets (150) opposés côté entrée, qui sont fixés de manière pivotante à un logement d'empilement (148) qui forme un puits d'empilement (144) et qui forme une butée (146) pour un sachet d'infusion avant (140) maintenu dans le puits d'empilement (144).

6. Dispositif selon l'une des revendications 1 à 5, **caractérisé en ce que** la ligne de transport est formée par une bande transporteuse (100) qui est déviée vers le bas immédiatement en amont du poste de prélèvement (102) par une orientation s'étendant essentiellement horizontalement au-delà de la verticale (110) et **en ce qu'**en dessous de la déviation de la bande transporteuse (100) est formé un logement (126) conçu de manière à recevoir un sachet d'infusion (140), qui est prévu entre le réservoir intermédiaire (124) et un poinçon d'empilement (120) qui peut être déplacé en alternance à travers le réservoir intermédiaire (124).
